# EUROPÄISCHE PATENTANMELDUNG

(11) **EP 4 818 385 A1**
(43) Veröffentlichungstag der Anmeldung: **07.10.2026**
(21) Anmeldenummer: 25167700.1
(22) Anmeldetag: 01.04.2025
(51) Int. Cl.: D04H 1/4242, D04H 1/46, D04H 1/492, H01M 4/86, H01M 4/88, H01M 8/0234

(54) **FLEXIBLES FLÄCHENGEBILDE FÜR ELEKTROCHEMISCHE ZELLEN ZUR WASSERSTOFFHERSTELLUNG**

(71) Anmelder: Carl Freudenberg KG, 69469 Weinheim (DE)
(72) Erfinder: BOCK, Achim, 69469 Weinheim (DE); BARSCH, Hannes, 69123 Heidelberg (DE); RAKOUSKY, Christoph, 64372 Ober-Ramstadt (DE)

(57) **Zusammenfassung**

Die vorliegende Erfindung betrifft ein Verfahren zur Herstellung eines leitfähigen Vliesstoffs bzw. einer Gasdiffusionsschicht für einen Elektrolyseur mit einer geringen plastischen Verformbarkeit und guten elastischen Eigenschaften sowie einen mit dem Verfahren erhältlichen leitfähigen Vliesstoff.

## Beschreibung

Die Erfindung betrifft ein Verfahren für die Herstellung eines leitfähigen Vliesstoffs, insbesondere einer Gasdiffusionsschicht für einen Elektrolyseur, sowie eine mit diesem Verfahren erhältliche Gasdiffusionsschicht.

Leitfähige Vliesstoffe werden als Gasdiffusionsschichten in Membrane Electrode Assemblies (MEAs) für PEM (Protonenaustauschmembran)-Brennstoffzellen und PEM-Elektrolyseuren eingesetzt und müssen elektronenleitfähig und gasdurchlässig, d.h. porös, sein. Im PEM-Elektrolyseur wird Wasser durch elektrischen Strom in Wasserstoff und Sauerstoff gespalten. Ein PEM-Elektrolyseur hat üblicherweise folgenden Aufbau:
Die Anodenseite wird von der Kathodenseite durch eine PEM getrennt, die für Protonen durchlässig ist. Auf beiden Seiten der PEM ist eine Katalysatorschicht aufgebracht ("catalyst coated membrane", CCM), auf der sich wiederum eine poröse Transportschicht ("porous transport layer", PTL) befindet, die den Kontakt zur Bipolarplatte herstellt. Über die Verteilstrukturen, z.B. Strömungskanäle, der Bipolarplatte wird anodenseitig Wasser zugeführt, das durch die PTL transportiert und am Katalysator oxidiert wird. Die erzeugten Protonen gelangen sodann über die befeuchtete PEM zur Kathodenseite, wo sie am Katalysator zu Wasserstoff reduziert werden. Der kathodenseitig entstandene Wasserstoff wird sodann über die PTL an die Bipolarplatte weitergeleitet. Der am Katalysator auf der Anodenseite entstandene Sauerstoff und der am Katalysator der Kathodenseite entstandene Wasserstoff werden dann über die Bipolarplatten abgeführt.

Neben dem vorstehend beschriebenen Zelldesign eines PEM-Elektrolyseurs, in dem die PEM nur für die auf der Anodenseite entstandenen Protonen durchlässig ist, besteht auch die Möglichkeit, dass Wasser aus dem Anodenraum durch die PEM in den Kathodenraum diffundiert, dieser somit mit Wasser geflutet wird. In diesem Fall dient die Bipolarplatte auf der Kathodenseite nicht nur als Auslass für den entstandenen Wasserstoff, sondern auch als Auslass für Wasser, das dann üblicherweise nach Separation des Wasserstoffs wieder dem Anodenraum zugeführt wird.

Ein Nachteil des Zelldesigns, in dem nur die Anodenseite mit Wasser gefüllt ist, liegt darin, dass eine hohe Druckdifferenz zwischen den Halbzellen vorliegt (üblicherweise 30 bar auf der Kathodenseite (H₂-Seite) und 5 bar auf der Anodenseite (O₂-Seite)). Das kann zu einer mechanischen Instabilität der Zelle führen, nämlich dass sich die Kathode auf die Anode zubewegt. Demgegenüber ist ein Zelldesign, in dem beide Halbzellen mit Wasser gefüllt sind, oft mechanisch stabiler, da es entweder keinen oder einen nur sehr geringen Differenzdruck zwischen den Halbzellen gibt. Darüber hinaus wirkt auch das Wasser auf der Kathodenseite kühlend. Nachteilig ist hingegen, dass die Dicke der Zelle im Vergleich zu der, in der die Kathodenseite nicht mit Wasser gefüllt ist, deutlich größer ist.

Als Katalysator werden anodenseitig üblicherweise metallische oder als Oxid vorliegende Edelmetalle wie Iridium, Iridiumoxid (IrO₂) und Ruthenium eingesetzt. Auf der Kathodenseite wird üblicherweise kohlenstoffgeträgertes Platin (Pt/C) oder metallisches Platin (z.B. Nano-Pt) als Katalysator eingesetzt.

Die PTL leitet die Elektronen, unterstützt das Thermomanagement und sorgt für einen effizienten Transport des Reaktionswassers sowie der Produktgase. Für die Anode wird üblicherweise eine titanbasierte PTL verwendet. Üblicherweise wird eine fließfähige Mischung aus Titanpartikeln, Lösungs- und Bindemitteln sowie Plastifizierern auf eine Folie aufgebracht, diese sodann getrocknet, zugeschnitten und abschließend gesintert.

Auf Titan basierende PTLs können auch kathodenseitig eingesetzt werden. Ein Nachteil derartiger PTLs ist aber ihr hoher Kontaktwiderstand zur direkt anschließenden CCM sowie deren erhebliche Dicke, die benötigt wird, um eine ausreichende mechanische Stabilität zu gewährleisten. Die PTLs aus gesinterten Titanpartikeln zeigen zudem bei Raumtemperatur sowie Normaldruck einen Energieverlust bei hohem Massentransport und hohen Stromdichten (Electrochemica Acta 2021, 399, 139436).

Aus diesem Grund werden kathodenseitig auch Gasdiffusionsschichten, auch Gasdiffusionslagen ("gas diffusion layer", GDL) genannt, als PTLs eingesetzt, wie sie auch in PEM-Brennstoffzellen zum Einsatz kommen.

Gasdiffusionsschichten bestehen typischerweise aus einem Kohlefaser-Substrat, das mit Fluor-Polymeren hydrophob ausgerüstet und mit einer mikroporösen Lage (MPL) flächig beschichtet ist. die MPL besteht in der Regel aus einem fluorhaltigen Polymer als Binder sowie einem elektrisch leitfähigen Material, wobei häufig Kohlenstoffmaterialien wie Ruß oder Graphit-Pulver verwendet werden.

EP 1 328 947 beschreibt die Herstellung einer Gasdiffusionsschicht mittels des Trockenvliesverfahrens. In diesem Verfahren wird ein Vliesstoff über den Weg der Trockenvlieslegung und Wasserstrahlverfestigung hergestellt. Dazu werden voroxidierte Polyacrylnitril (PAN)-Fasern verwendet. Nachfolgend wird der Vliesstoff auf Dicke kalibriert und vollständig karbonisiert. Anschließend wird das Zwischenprodukt mit Fluor-Polymeren hydrophob ausgerüstet.

WO 2022/037939 offenbart, dass neben den vorstehend genannten Kohlefaser-Vliesstoffen auch Kohlefaser-Papiere (nassgelegte und chemisch gebundene Kohlefaser-Vliesstoffe mit chemischen Bindern, die karbonisiert werden) und Kohlefaser-Gewebe (z.B. aus Garnen aus oxidierten, aber noch nicht karbonisierten PAN-Fasern, die nach dem Weben karbonisiert werden) als Kohlefaser-Substrate für Gasdiffusionsschichten eingesetzt werden. Kohlefaser-Papiere haben den technischen Vorteil einer hohen Festigkeit gegenüber unterschiedlichen Belastungsarten (Zug, Biegung, Scherung). Dadurch ist eine gute Kraftübertragung von den Stegen der Strömungsverteilerplatten/Bipolarplatten in die Kanalbereiche gegeben, was für eine homogene Flächenpressung und Anbindung der Elektroden durch die Gasdiffusionsschicht sorgt. Verbunden sind diese Vorteile allerdings immer mit einer starken Materialversprödung, was sich durch ein Brechen der Papiere bereits bei geringer Biegebeanspruchung zeigt. Insbesondere die zur Herstellung der Kohlefaser-Papiere eingesetzten chemischen Binder (in der Regel Phenolharze) verspröden bei der Karbonisierung stark und verursachen das beschriebene Materialverhalten. Wünschenswert wäre eine Kombination von hoher Biegesteifigkeit und hoher Biegsamkeit, was gemäß WO 2022/037939 dadurch erzielt werden kann, indem das Kohlefaser-Substrat nicht nur mit einem Fluor-Polymer hydrophob ausgerüstet wird, sondern darüber hinaus auch mit sogenannten Hochleistungskunststoffen (Thermoplaste) wie Polyaryletherketonen, Polysulfonen oder Polycarbonaten.

In US 12,034,187 wird darauf hingewiesen, dass die Gasdiffusionsschicht bei der Herstellung eines Brennstoffzellenstacks nur bedingt in der Lage ist, den bei der Herstellung des Stacks angelegten Kompressionsdruck auszugleichen und zu verteilen. Insbesondere Kohlefaser-Papiere, die mittels Nassvliesverfahren hergestellt werden, zeigen nur eine sehr geringe Kompressibilität, nachdem sie einmal in dem Stack eingebaut sind. Sie sind somit nur bedingt in der Lage, Druck- und Temperaturschwankungen während des Betriebs der Brennstoffzelle auszugleichen, um die PEM und die Katalysatorschichten vor Zerstörung zu schützen. Bei den Kohlefaser-Papieren handelt es sich üblicherweise um ein isotropisches Material, dessen Kohlenstofffasern bei Anlegen eines Drucks relativ leicht brechen. US 12,034,187 schlägt nun als Abhilfe vor, die Kohlefasern anisotrop auszurichten, d.h. längs bzw. längs und quer zu legen, um die mechanische Belastbarkeit zu erhöhen.

In EP 4 358 196 wird ebenfalls darauf hingewiesen, dass Gasdiffusionsschichten beim Einsatz in Brennstoffzellen in der Regel stark verpresst werden, wobei die Eigenschaften bei Kompression über den Anteil der elastischen und plastischen Verformung charakterisiert werden können. Bei einer plastischen Verformung kehrt die Gasdiffusionsschicht nach einer Belastung nicht wieder zu 100 % in die ursprüngliche Form zurück, sondern es bleibt eine permanente Formänderung. Die Eigenschaft eines Materials, seine Form permanent zu setzen, wenn eine Spannung angelegt wird, d.h. seine Verformbarkeit, wird auch mit dem Begriff "Setzen" bezeichnet. Materialien, die über eine geringe plastische Verformbarkeit verfügen, weisen ein geringes Setzverhalten auf. Gemäß EP 4 358 196 soll das Setzen bei der Herstellung eines Brennstoffzellenstacks möglichst nicht auftreten, was dadurch erzielt wird, dass die Gasdiffusionsschicht nach Aufbringen der mikroporösen Schicht einer Nachbehandlung bei erhöhtem Druck und gegebenenfalls erhöhter Temperatur unterzogen wird, so dass die Gasdiffusionsschicht vor Einbau in den Brennstoffzellenstack nur noch eine geringe plastische Verformbarkeit aufweist.

EP 3 610 527 und WO 2023/129549 beschreiben Gasdiffusionsschichten für einen Elektrolyseur oder eine Brennstoffzelle, basierend auf Metallfasern. Metallische Flächengebilde sind aber wenig kompressibel und darüber hinaus sehr teuer.

Der vorliegenden Erfindung liegt die Aufgabe zugrunde, ein flächiges elektrisch leitfähiges Material und eine darauf basierende Gasdiffusionsschicht für einen Elektrolyseur zur Verfügung zu stellen, wobei das Material insbesondere nach Einbau in einen PEM-Elektrolyseur eine hinreichende Elastizität aufweist.

Überraschenderweise wurde gefunden, dass diese Aufgabe mit einem über ein Trockenvliesverfahren hergestellten leitfähigen Vliesstoff gelöst werden konnte.

Das erfindungsgemäße Verfahren zur Herstellung eines leitfähigen Vliesstoffs umfasst die Schritte:
a) Legen von präoxidierten Fasern auf trockenem Wege mittels Krempel- und/oder Kardiermaschinen zu einem Faserflor mit einem Flächengewicht von 30 bis 300 g/m²,
b) Verfestigen des Faserflors durch Hochdruck-Fluidstrahlen bei Drücken von 0,1 bis 30 MPa,
c) Trocknen des verfestigten Faserflors, um ein präoxidiertes Vlies mit einer Restfeuchtigkeit von 1 bis 50% zu erhalten,
d) Nachbehandeln des präoxidierten Vlieses bei einem Druck von 1 bis 10 MPa bei einer Temperatur von 100 bis 400 °C,
e) Karbonisieren des nachbehandelten und präoxidierten Vlieses bei Temperaturen zwischen 800 und 2500°C und gegebenenfalls Aufbringen einer mikroporösen Lage, enthaltend leitfähige Partikel in einer Matrix aus einem polymeren Bindemittel, auf einer Fläche des karbonisierten Vlieses, um den leitfähigen Vliesstoff zu erhalten,
wobei der leitfähige Vliesstoff nach einmaligen Anlegen eines Druckes von 3,0 MPa:
i) einen Compression Set-Wert von höchstens 5 µm aufweist,
   wobei der Compression Set-Wert an einer ringförmigen Probe mit einem inneren Durchmesser von 45 mm, einem äußeren Durchmesser von 56 mm und einem Flächengewicht von 90 bis 200 g/m² bestimmt wird, indem die Probe drei Belastungszyklen von 0,025 MPa auf 3,0 MPa unterzogen wird und sich der Compression Set-Wert aus der Differenz der bei 3,0 MPa gemessenen Dicke im ersten Belastungszyklus und im dritten Belastungszyklus ergibt, und
ii) die Dicke des leitfähigen Vliesstoffs nach dem Anlegen des Druckes von 3,0 MPa um 20 % oder weniger, vorzugsweise um 10 % oder weniger und am meisten bevorzugt um 5 bis 10 % reduziert ist.

Im Schritt (a) kann der Faserflor durch Legen einer Lage der präoxidierten Fasern oder durch Übereinanderlegen von zwei oder mehr Lagen präoxidierter Fasern hergestellt werden. Beim Legen von präoxidierten Fasern kommen üblicherweise Vliesleger zum Einsatz, wie sie z.B. in DE 298 22 462 U1 oder DE 10 2013 109 251 beschrieben werden. In einer bevorzugten Ausführungsform wird ein Querleger eingesetzt, um die Zugfestigkeit des Faserflors und damit letztendlich des daraus hergestellten leitfähigen Vliesstoffs quer zur Maschinenrichtung zu erhöhen.

Des Weiteren betrifft die vorliegende Erfindung einen leitfähigen Vliesstoff, der durch das vorstehend beschriebene Verfahren erhältlich ist.

Ein weiterer Gegenstand der Erfindung ist die Verwendung des erfindungsgemäßen leitfähigen Vliesstoffs als Gasdiffusionsschicht für einen Elektrolyseur.

Es war überraschend, dass der erfindungsgemäße Karbonfaserbasierte Vliesstoff, der trockengelegt und per Wasserstrahl verfestigt wurde, ein sehr robustes Verhalten in Elektrolyseuren zeigt. Transportprozesse auf Kathodenseite werden nicht negativ beeinflusst. Außerdem zeigt der erfindungsgemäße leitfähige Vliesstoff eine große Robustheit über alle Kompressionszyklen hinweg. Diese Eigenschaften lassen sich auf den Compression Set-Wert (Parameter (i)) zurückführen. Ab dem zweiten Kompressionszyklus zeigt der erfindungsgemäße leitfähige Vliesstoff durchweg reversible Kompressionseigenschaften, die bei nassgelegten, chemisch gebundenen Kohlefaser-Vliesstoffen (Papieren) nicht gegeben sind. Diese sind vielmehr spröde und zeigen über mehrere Kompressionszyklen hinweg eher plastische Kompressionseigenschaften. Bei Verwendung der erfindungsgemäßen leitfähigen Vliesstoffe können Systeme wie PEM-Elektrolyseure besser planbar ausgelegt werden, da die Kompressionseigenschaften und das Verhalten unter Druck des als Gasdiffusionsschicht verwendeten leitfähigen Vliesstoffs bekannt sind. Durch die gute und wiederholbare Rückfederung, sobald der Druck abnimmt, hält der erfindungsgemäße leitfähige Vliesstoff den Kontakt zu den benachbarten Komponenten. Diese Rückfederung fällt bei den erfindungsgemäßen Trockenvliesstoffen wesentlich größer aus als bei Kohlefaser-Papieren; thermische und elektrische Leitung sind somit gewährleistet. Ein weiterer Vorteil der reversiblen Rückfertigung ist, dass Fertigungstoleranzen der benachbarten Komponenten zuverlässig ausgeglichen werden können.

Parameter (ii) des erfindungsgemäßen leitfähigen Vliesstoffs gibt wiederum an, dass der erfindungsgemäße leitfähige Vliesstoff vor seiner Weiterverarbeitung eine im Vergleich zu Kohlefaser-Papieren relativ geringe plastische Verformbarkeit zeigt. Auch dies hat Vorteile bei dem Einbau des erfindungsgemäßen leitfähigen Vliesstoffs als Gasdiffusionsschicht in einem Elektrolyseur. So können z.B. herstellungsbedingte Dickentoleranzen besser ausgeglichen oder geringere Anforderungen an herstellungsbedingte Toleranzen der Stack-Komponenten gestellt werden. Zudem verändern sich aufgrund der geringen plastischen Verformung dann auch die sonstigen dickenabhängigen Eigenschaften der Vliesstoff-PTL über die Lebensdauer im Elektrolyseur nur geringfügig, insbesondere die Stofftransporteigenschaften und die Leitfähigkeit. Im Ergebnis wird eine gleichmäßigere Performance über die Lebensdauer mit geringeren Degradationsraten erreicht.

Im Rahmen der Erfindung bezeichnet ein Faserflor (auch Vliesflor genannt) allgemein ein Flächengebilde, das mehrheitlich aus vereinzelten Fasern besteht, deren Zusammenhalt im Wesentlichen nur durch die ihnen eigene Haftung gegeben ist. Die Umwandlung eines Faserflors in einen Vliesstoff durch das Erzeugen eines festeren Verbundes zwischen den Fasern, als er im Faserflor vorliegt, erfolgt erfindungsgemäß durch Verfestigen mittels Hochdruck-Fluidstrahlen bei Drücken von 0,1 bis 30 MPa.

Als Fasermaterial werden vorzugsweise PAN-Fasern eingesetzt. PAN-Fasern werden durch radikalische Polymerisation einer Monomerzusammensetzung hergestellt, die vorzugsweise wenigstens 90 Gew.-%, bezogen auf das Gesamtgewicht der zur Polymerisation eingesetzten Monomere, Acrylnitril enthält. Die erhaltene Polymerlösung wird, z.B. durch Nassspinnen und Koagulation, zu Filamenten versponnen und zu Tauen zusammengefasst. Bevor dieser PAN-Precursor unter hohen Temperaturen zu Kohlenstofffasern umgewandelt wird, wird er in der Regel in einer sauerstoffhaltigen Atmosphäre bei erhöhten Temperaturen von etwa 180 bis 300 °C einer oxidativen Zyklisierung (kurz als Oxidation bezeichnet) unterzogen. Durch die dabei resultierende chemische Vernetzung wird die Formstabilität der Fasern verbessert. Derartige präoxidierte Fasern werden im Schritt (a) des erfindungsgemäßen Verfahrens mittels Krempel- und/oder Kardiermaschinen zu einem Faserflor mit einem Flächengewicht von 30 bis 300 g/m² gelegt.

Es können außerdem mehrere Faserflore (d.h. mehrere Lagen präoxidierter Fasern), die sich z.B. durch die Ausrichtung der Fasern oder durch die Art der Fasern oder anhand ihres Flächengewichts unterscheiden, übereinander gelegt werden. Unter Verwendung von üblichen Vlieslegern kann auch derselbe Flor mehrmals auf sich selbst gelegt oder die Faserausrichtung geändert werden. Das im Schritt (a) des erfindungsgemäßen Verfahrens genannte Flächengewicht von 30 bis 300 g/m² ist dann die Summe der Flächengewichte aller übereinandergelegten Faserflore.

Nach Verfestigen des Faserflors durch Hochdruck-Fluidstrahlen, wie vorstehend beschrieben, und Trocknen des verfestigten Faserflors, um ein präoxidiertes Vlies mit einer Restfeuchtigkeit von 1 bis 50 % zu erhalten, wird das präoxidierte Vlies bei einem Druck von 1 bis 10 MPa und bei einer Temperatur von 100 bis 400 °C gemäß Schritt (d) des erfindungsgemäßen Verfahrens nachbehandelt. Zur Nachbehandlung im Schritt (d) können übliche Vorrichtungen, wie Ein- oder Mehretagenpressen, Endlos-Bandpressen oder Kalander eingesetzt werden.

Im Schritt (e) des erfindungsgemäßen Verfahrens wird das nachbehandelte und präoxidierte Vlies bei Temperaturen zwischen 800 und 2500 °C einer Pyrolyse unterzogen (Karbonisierung), um Kohlenstofffasern zu erhalten. Üblicherweise wird die Karbonisierung unter Inertgas durchgeführt. Der so erhaltene (karbonisierte) Vliesstoff verfügt über eine hohe Reinheit, ist leicht, hochfest und sehr gut leitfähig für Elektrizität und Wärme.

Um die Transportvorgänge durch die Gasdiffusionsschicht und an den Grenzflächen zu verbessern, kann es vorteilhaft sein, die Hydrophobizität des karbonisierten Vliesstoffes zu erhöhen. Geeignete Hydrophobierungsmittel sind fluorhaltige Polymere, wie Polytetrafluorethylen (PTFE) und Tetrafluorethylen-Hexafluorpropylen-Copolymere (FEP). Bevorzugt wird als Hydrophobierungsmittel PTFE eingesetzt. Der karbonisierte Vliesstoff kann durch übliche Imprägnierungsverfahren mit dem Hydrophobierungsmittel ausgerüstet werden. Dazu kann z.B. eine PTFE-Dispersion in einem Tauchbad appliziert, das Lösungsmittel verdampft und das behandelte Fasermaterial bei erhöhten Temperaturen von in der Regel wenigstens 300 °C gesintert werden. Bevorzugt weist der karbonisierte Vliesstoff einen Gehalt an Hydrophobierungsmitteln von 3 bis 40 Gew.-%, bezogen auf das Gesamtgewicht des mit einem Hydrophobierungsmittel ausgestatteten karbonisierten Vliesstoffs, auf.

Zur Verbesserung der elektrischen und der thermischen Leitfähigkeit kann der karbonisierte Vliesstoff mit wenigstens einem leitfähigkeitsverbessernden Additiv ausgerüstet werden. Geeignete leitfähigkeitsverbessernde Additive sind z.B. Metallpartikel, Kohlenstoffpartikel usw. Bevorzugt ist das leitfähigkeitsverbessernde Additiv aus Ruß, Graphit, Graphen, Kohlenstoffnanoröhren, Kohlenstoffnanofasern und Mischungen davon ausgewählt. Die Ausrüstung des karbonisierten Vlieses mit wenigstens einem leitfähigkeitsverbessernden Additiv kann beispielsweise gemeinsam mit dem Hydrophobierungsmittel, insbesondere einer PTFE-Dispersion, erfolgen. Bevorzugt weist der karbonisierte Vliesstoff einen Gehalt an leitfähigkeitsverbessernden Additiven von 0 bis 40 Gew.-%, bezogen auf das Gesamtgewicht des mit einem leitfähigkeitsverbessernden Additiv und gegebenenfalls mit einem Hydrophobierungsmittel ausgestatteten karbonisierten Vliesstoffs, auf. Wenn der karbonisierte Vliesstoff ein leitfähigkeitsverbesserndes Additiv enthält, dann vorzugsweise in einer Menge von 0,1 bis 40 Gew.-%, besonders bevorzugt von 0,5 bis 30 Gew.-%, bezogen auf das Gesamtgewicht des mit einem leitfähigkeitsverbessernden Additiv und gegebenenfalls einem Hydrophobierungsmittel ausgestatteten karbonisierten Vliesstoffs.

Der karbonisierte Vliesstoff weist vorzugsweise eine Dicke im Bereich von 50 bis 750 µm, besonders bevorzugt von 100 bis 500 µm, auf. Diese Dicke bezieht sich auf den unkomprimierten Zustand des karbonisierten Vliesstoffs, d.h. vor Einbau in einen Elektrolyseur.

Der erfindungsgemäße leitfähige Vliesstoff besteht aus dem karbonisierten Vliesstoff und gegebenenfalls einer auf einer Fläche des karbonisierten Vlieses aufgebrachten MPL. Üblicherweise enthält die MPL leitfähige Partikel in einer Matrix aus einem polymeren Bindemittel. Die leitfähigen Partikel sind vorzugsweise aus leitfähigen Kohlenstoffpartikeln, insbesondere Ruß, Graphit, Graphen, Kohlenstoffnanoröhren, Kohlenstoffnanofasern und Mischungen davon, ausgewählt. Bevorzugt wird Ruß, Graphit oder eine Mischung davon eingesetzt.

Das polymere Bindemittel enthält wenigstens ein Polyaryletherketone wie Polyetheretherketon (PEEK) und/oder ein fluorhaltiges Polymer. Das fluorhaltige Polymer ist vorzugsweise aus PTFE, FEP, Perfluoralkoxy-Polymeren und Mischungen davon ausgewählt; besonders bevorzugt wird PTFE eingesetzt.

Vorzugsweise wird zur Herstellung der MPL das polymere Bindemittel in einer Menge von 0,5 bis 50 Gew.-%, besonders bevorzugt von 1,0 bis 40 Gew.-% und insbesondere von 10 bis 25 Gew.-%, bezogen auf das Gesamtgewicht aus polymeren Bindemitteln und leitfähigen Partikeln, eingesetzt.

Die MPL weist vorzugsweise eine Dicke im Bereich von 5 bis 150 µm, besonders bevorzugt von 10 bis 100 µm, auf. Diese Dicke bezieht sich auf den unkomprimierten Zustand der MPL, d.h. vor Einbau in einen Elektrolyseur.

Die Parameter (i) und (ii) werden an dem erfindungsgemäßen leitfähigen Vliesstoff erst nach Anlegen eines Druckes von 3,0 MPa bestimmt.

### Compression Set-Wert (Parameter (i)):

Der Compression Set-Wert ist ein Maß dafür, wie sich ein Material, vorliegend der erfindungsgemäße leitfähige Vliesstoff, bei einer Druckverformung und anschließender Entspannung verhält. Der als Gasdiffusionsschicht eingesetzte erfindungsgemäße leitfähige Vliesstoff wird beim Einsatz in einem Elektrolyseur in der Regel stark verpresst (komprimiert). Zur Charakterisierung der Eigenschaften einer Gasdiffusionsschicht infolge der Kompression kann der Anteil der elastischen und plastischen Verformung herangezogen werden. Der Compression Set-Wert beschreibt die bleibende Verformung, die nach Aufhebung der einwirkenden Kraft verbleibt. Gasdiffusionsschichten mit einem Setzverhalten zeichnen sich durch geringe Compression Set-Werte aus. Die Bestimmung des Compression Set-Werts kann in der folgenden Art und Weise erfolgen.

Aus dem zu prüfenden leitfähigen Vliesstoff (Gasdiffusionsschicht) werden über die gesamte Breite drei Proben (links, rechts und Mitte) entnommen, aus denen ein Mittelwert gebildet wird. Weist das Material herstellungsbedingt eine Maschinenrichtung auf, so werden die Proben senkrecht zur Maschinenrichtung entnommen. Die Proben sind ringförmig mit einem inneren Durchmesser von 45 mm und einem äußeren Durchmesser von 56 mm. Die Probenfläche beträgt 8,72577 cm². In einer Prüfmaschine werden die Proben einer zeitlich veränderlichen Druckkraft ausgesetzt, die senkrecht auf die Fläche der Proben wirkt. Ein Sensor bestimmt die Änderung der Dicke der Gasdiffusionsschicht im zeitlichen Verlauf bei dem jeweils einwirkenden Druck. Die Probe ist auf einer Vorrichtung zur Bestimmung der elastischen und plastischen Verformung mittels Kraftsensoren gelagert, wobei die Bewegung über Federn auf die Probe übersetzt wird. Der Verfahrweg bis zum Erreichen der maximalen Druckkraft wird über Wegsensoren bestimmt. Da die Verformung der Probe nicht linear ist, wird der Messverlauf der relativen Veränderung angepasst. Ein Messzyklus, d.h. eine einmalige Belastung bis Maximaldruck und die folgende Entlastung, dauert 1 min. Die Probe durchfährt drei Belastungszyklen. Der Anfangswert, bei dem nur eine geringe Kraft auf die Probe ausgeübt wird, beträgt 0,025 MPa. Ein typischer Druckwert zur Bestimmung des Compression Set-Werts ist 3,0 MPa.

Der Compression Set-Wert für einen bestimmten Druck, vorliegend für einen Druckwert von 3,0 MPa, ergibt sich aus der Differenz der bei diesem Druck gemessenen Dicke im ersten Belastungszyklus und der bei diesem Druck im dritten Belastungszyklus gemessenen Dicke (Parameter (i)). Der mittels des erfindungsgemäßen Verfahrens (Schritte (a)-(e)) erhaltene leitfähige Vliesstoff weist nach einmaligem Anlegen eines Druckes von 3,0 MPa einen Compression Set-Wert von höchstens 5 µm auf.

### Plastizität (Parameter (ii))

Die Dicke des leitfähigen Vliesstoffs ist nach dem Anlegen des Druckes von 3,0 MPa um 20% oder weniger, vorzugsweise um 10 % oder weniger und am meisten bevorzugt um 5 bis 10 % reduziert.

Die Parameter (i) und (ii) lassen sich insbesondere durch Verfahrensschritt (d), d.h. bei der Nachbehandlung des präoxidierten Vlieses bei erhöhtem Druck und erhöhter Temperatur, einstellen.

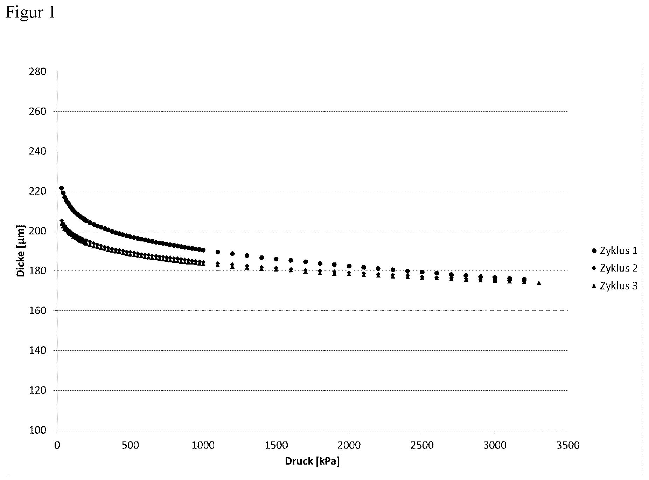

Figur 1 zeigt die Kompressionskurve für den im Beispiel 1 hergestellten leitfähigen Vliesstoff. Die Dicke des leitfähigen Vliesstoffs sinkt unter Druck von etwa 220 µm auf etwa 177 µm bei 3,0 MPa ab. Wird der Druck auf das Material gelöst, so federt es auf eine Dicke von etwa 205 µm ohne Druck zurück. Der erste Zyklus liefert somit Parameter (ii).

Die Rückfederung ist bei den nachfolgenden Kompressionsvorgängen weitgehend reversibel, wie die Kompressionszyklen 2 und 3 zeigen, anhand derer dann Parameter (i) bestimmt wird.

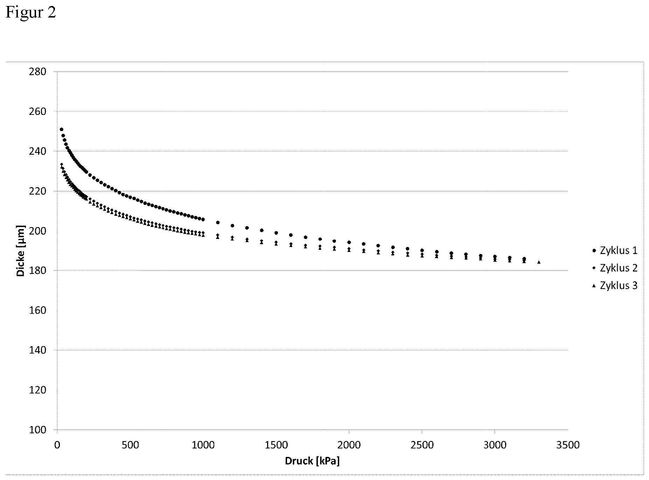

Figur 2 zeigt Beispiel 1 nach Hydrophobierung mit einer wässrigen Tinte bestehend aus 30 Gew.-% PTFE und 70 Gew.-% Ruß bezogen auf den Feststoff. Die Ausrüstung erfolge durch Foulard-Imprägnierung mit 15% Ausrüstungsgewicht bezogen auf die Masse Carbonfaservliesstoff.

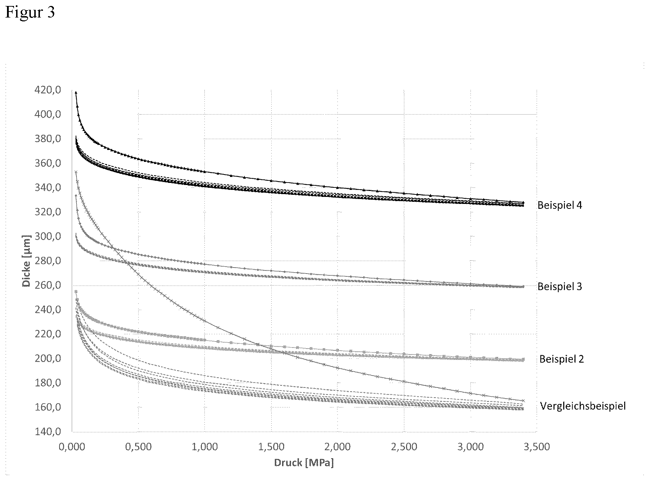

Figur 3 zeigt einen Vergleich des Kompressionsverhaltens von drei erfindungsgemäßen leitfähigen Vliesstoffen unterschiedlicher Dicke nach Hydrophobierung mit einem hydrophobierten Kohlefaser-Papier. Die erfindungsgemäßen leitfähigen Vliesstoffe zeigen eine geringe Kompressibilität und ein reversibles Rückfederungsverhalten nach Kompression, während das Kohlefaser-Papier nach einmaliger Kompression in einem sehr viel geringeren Ausmaß zurückfedert. Gegenüber der Ausgangsdicke von etwa 355 µm beträgt die Dicke des Kohlefaser-Papiers nach einmaliger Kompression ohne Druck nur noch etwa 250 µm. Eine Reversibilität des Rückfederungsverhaltens ist bei dem Kohlefaser-Papier erst nach dem achten Zyklus gegeben.

### Beispiele

### Beispiel 1

Ein Faserflor bestehend aus präoxidierten PAN-Fasern mit einem Fasertiter von 2,2 dtex, wird einer Verfestigungseinheit zugeführt. Die Fasern werden mittels hochenergetischer Wasserstrahlen beidseitig bei Drücken von jeweils ca. 150 bar in der ersten Stufe und jeweils ca. 200 bar in einer zweiten Stufe verwirbelt und miteinander verschlungen. Der Vliesstoff wird danach getrocknet und aufgerollt. Anschließend wird der Vliesstoff einer Dickenkalibrierung unterzogen, wodurch die Dicke des wasserstrahlverfestigten Vliesstoffes auf 0,25 mm reduziert wird. Anschließend wird der Vliesstoff einer Carbonisierungseinheit zugeführt, in der unter einer Stickstoffatmosphäre bei etwa 1000 bis 1400 °C die Carbonisierung erfolgt. Der resultierend leitfähige Vliesstoff hat ein Flächengewicht von 100 g/m².

## Patentansprüche

1. Verfahren zur Herstellung eines leitfähigen Vliesstoffs, umfassend die Schritte:
a) Legen von präoxidierten Fasern auf trockenem Wege mittels Krempel- und/oder Kardiermaschinen zu einem Faserflor mit einem Flächengewicht von 30 bis 300 g/m²,
b) Verfestigen des Faserflors durch Hochdruck-Fluidstrahlen bei Drücken von 0,1 bis 30 MPa,
c) Trocknen des verfestigten Faserflors, um ein präoxidiertes Vlies mit einer Restfeuchtigkeit von 1 bis 50% zu erhalten,
d) Nachbehandeln des präoxidierten Vlieses bei einem Druck von 1 bis 10 MPa bei einer Temperatur von 100 bis 400 °C,
e) Karbonisieren des nachbehandelten und präoxidierten Vlieses bei Temperaturen zwischen 800 und 2500°C und gegebenenfalls Aufbringen einer mikroporösen Lage, enthaltend leitfähige Partikel in einer Matrix aus einem polymeren Bindemittel, auf einer Fläche des karbonisierten Vlieses, um den leitfähigen Vliesstoff zu erhalten,
wobei der leitfähige Vliesstoff nach einmaligem Anlegen eines Druckes von 3,0 MPa:
i) einen Compression Set-Wert von höchstens 5 µm aufweist,
wobei der Compression Set-Wert an einer ringförmigen Probe mit einem inneren Durchmesser von 45 mm, einem äußeren Durchmesser von 56 mm und einem Flächengewicht von 90 bis 200 g/m² bestimmt wird, indem die Probe drei Belastungszyklen von 0,025 MPa auf 3,0 MPa unterzogen wird und sich der Compression Set-Wert aus der Differenz der bei 3,0 MPa gemessenen Dicke im ersten Belastungszyklus und im dritten Belastungszyklus ergibt, und
ii) die Dicke des leitfähigen Vliesstoffs nach dem Anlegen des Druckes von 3,0 MPa um 20% oder weniger, vorzugsweise um 10 % oder weniger und am meisten bevorzugt um 5 bis 10 % reduziert ist.

2. Verfahren gemäß Anspruch 1, wobei im Schritt (a) der Faserflor durch Legen einer Lage der präoxidierten Fasern oder durch Übereinanderlegen von zwei oder mehr Lagen präoxidierter Fasern hergestellt wird.

3. Verfahren gemäß Anspruch 2, wobei das Übereinanderlegen mittels eines Querlegers durchgeführt wird.

4. Leitfähiger Vliesstoff erhältlich durch ein Verfahren gemäß einem der Ansprüche 1 bis 3.

5. Verwendung des leitfähigen Vliesstoffs gemäß Anspruch 4 als Gasdiffusionsschicht für einen Elektrolyseur.
